# EUROPEAN PATENT SPECIFICATION

(11) **EP 4 261 579 B1**
(45) Date of publication and mention of the grant of the patent: **25.02.2026**
(21) Application number: 22168240.4
(22) Date of filing: 13.04.2022
(51) Int. Cl.: G02B 6/44

(54) **A FLEXIBLE CABLE HOLDER FOR INTEGRATION WITH A FIBER OPTIC MANAGEMENT SYSTEM**
FLEXIBLER KABELHALTER ZUR INTEGRATION MIT EINEM FASEROPTISCHEN MANAGEMENTSYSTEM
SUPPORT DE CÂBLE FLEXIBLE POUR INTÉGRATION AVEC UN SYSTÈME DE GESTION DE FIBRE OPTIQUE

(43) Date of publication of application: 18.10.2023
(73) Proprietor: Raycap, S.A., 15124 Athens (GR)
(72) Inventor: Marathias, Megaklis, 15124 Maroussi, Athens (GR); Bakatsias, Kostas, 15124 Maroussi, Athens (GR); Coletti, Charis, 15124 Maroussi, Athens (GR)
(74) Representative: Wilson Gunn

(56) References cited:
- US-A- 5 323 480
- US-A1- 2006 008 235
- US-A1- 2019 204 524

## Description

### BACKGROUND

Fiber to x (FTTx) access networks, also called fiber to the premises (FTTP), is the connection of optical fiber from a central point or office directly to remote ends, where "x" can be Home (FTTH), Curb (FTTC), or Building (FTTB) of the fiber network. The fiber optic cables originate at the central office to fiber distribution hubs (FDH), from the FDHs to network access points (NAPs), and then finally into the buildings through a terminal that serves as a junction box. Each of these locations includes a variety of fiber-optic distribution cabinets, also referred as network nodes, that provide a connection interface for the fiber optic cables. The fiber optic cables entering a fiber-optic distribution cabinet (or FTTx network node) may be referred to as feeder cables, and the cables exiting the cabinets may be referred to as drop cables. Such cables can be heavy duty direct buried cables or lighter cables running through direct buried ducts or multi-ducts, and a large number of cables and micro-ducts need to be managed within the distribution cabinets. In order to reduce the cost and complexity of deployment, an apparatus is needed within the cabinets that can be quickly operated with minimal effort and minimum tools for fast and simple installation. Cables within the cabinets also should be easily accessed and removed.

Cable holders are used in fiber-optic distribution cabinets to fix fiber-optic cables in a secure manner and to organize the cables and avoid pulling the cables. For example, the cable holders may secure the fiber-optic cables before they are lead into a splicing tray. Many types of cable holders have been proposed, but they have drawbacks including: i) only accepting one size/diameter of cable or only accepting a cable customized for that holder, ii) requiring the use of tools to insert and remove the cable, iii) no integration between the cable holder and fiber management system inside the fiber-optic distribution cabinet, and iv) the cable holder cannot be removed from the fiber-optic distribution cabinet and easily replaced in with another element without affecting the fiber management system with or without tools.

US2006008235A1 shows a cable clip including a housing with multiple fingers that form slots designed to securely hold and organize up to sixteen optical fiber cables of different types. The slots feature narrow lips and a hinged, latchable gate to prevent cables from slipping out. The clip's internal geometry provides varying slot widths to accommodate and protect cables, while trumpet-shaped flares guide cables that need to bend.

Accordingly, there is a need for an improved cable holder, and optionally for an improved cable holder for use in fiber optic management systems.

### BRIEF DESCRIPTION OF THE DRAWINGS

The included drawings are for illustrative purposes and serve to provide examples of possible structures and operations for the disclosed inventive systems, apparatus, methods and computer-readable storage media. These drawings in no way limit any changes in form and detail that may be made by one skilled in the art.
Figures 1A and 1B illustrate a side and angled view, respectively, of a flexible cable holder within enlarged sections showing details of the components thereof.
Figures 2A-2C illustrate an example of a flexible cable holder installed within a fiber-optic distribution cabinets according to one embodiment.

### DETAILED DESCRIPTION

The disclosed embodiments relate to a flexible cable holder that can be integrated into a fiber optic management system. The following description is presented to enable one of ordinary skill in the art to make and use the invention and is provided in the context of a patent application and its requirements. Various modifications to the disclosed embodiments and the generic principles and features described herein will be readily apparent. The disclosed embodiments are mainly described in terms of particular methods and systems provided in particular implementations. However, the methods and systems will operate effectively in other implementations. Phrases such as "one embodiment" and "another embodiment" may refer to the same or different embodiments. The embodiments will be described with respect to systems and/or devices having certain components. However, the systems and/or devices may include more or less components than those shown, and variations in the arrangement and type of the components may be made without departing from the scope of the invention. The disclosed embodiments will also be described in the context of particular methods having certain steps. However, the method and system operate effectively for other methods having different and/or additional steps and steps in different orders that are not inconsistent with the disclosed embodiments. Thus, the disclosed embodiments are not intended to be limited to the embodiments shown, but is to be accorded the widest scope consistent with the principles and features described herein.

The disclosed embodiments provide a flexible cable holder that can be integrated into a fiber optic management system. Due to design and structure of the disclosed flexible cable holder, fiber optic cables can be inserted and removed from the cable holder without the use of tools and the cable holder is capable of holding many commercially available or custom cables of varying diameters at the same time. In some embodiments, the flexible cable holder can be integrated into a fiber optic management system (FMS) as a snap-in component, allowing easy replacement in the field without the use of tools. Although the disclosed embodiments are described as pertaining to fiber optic cables, the flexible cable holder may be used to retain other types of cables or tubes, such as power cables for example.

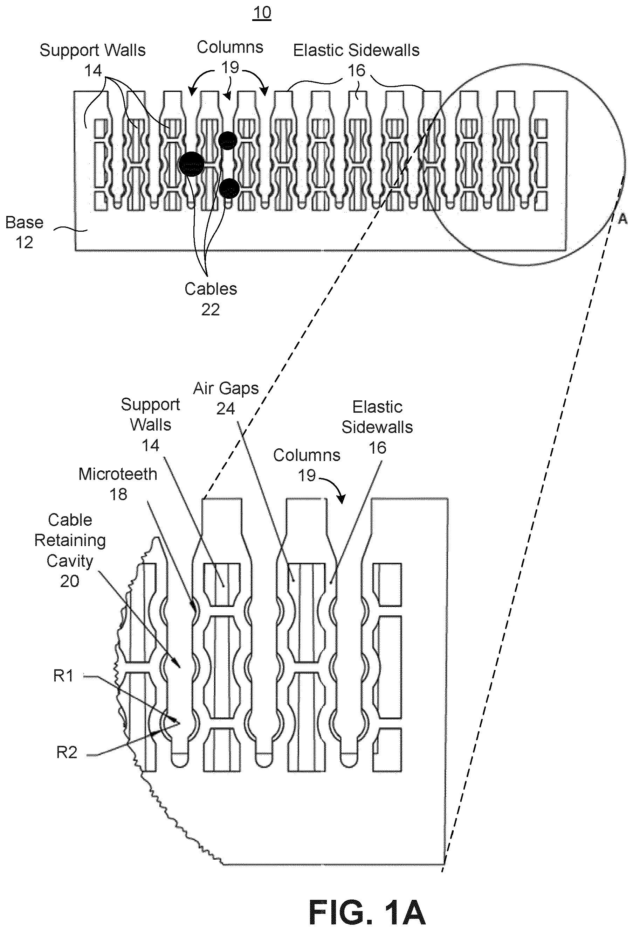

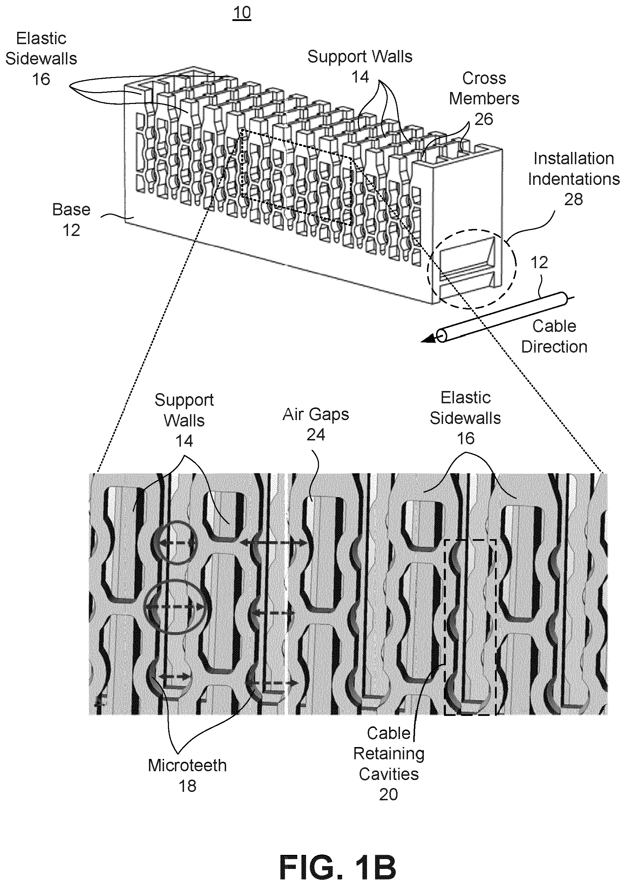

Figures 1A and 1B illustrate a side and angled view, respectively, of a flexible cable holder within enlarged sections showing details of the components thereof. According to one embodiment, the flexible cable holder 10 comprises a base 12 that may be rectangular in shape with two long sides and two short sides, as shown. In other embodiments, the base may have other shapes such as square, for example. Multiple support walls 14 may extend vertically out of the base 12. Elastic sidewalls 16 extend vertically from the base 12 and long both ends of each of the support walls 14, with spaces in-between neighboring ones of the elastic sidewalls 16. In one embodiment, the support walls 14 face in a direction generally parallel to the short sides of the base 10, while the elastic sidewalls 16 face in a direction generally perpendicular to the support walls 14.

In one embodiments, the flexible cable holder 12 comprises a single part made of an elastic material. An example of an elastic material may include thermoplastic vulcanizates (TPV). In addition to or alternatively, the flexible cable holder 12 may comprise more than one part with different materials. For example, the base 12 and the support walls 14 may comprise a stiffer material than the flexible material comprising the elastic sidewalls 16.

A plurality of microteeth 18 are along edges of the elastic sidewalls 16 that are generally semi-circle or semi-oval in shape and define cable retaining cavities 20 within the spaces between neighboring ones of the elastic sidewalls 16 to retain respective cables 12. The microteeth 18 are formed by cut-outs in the material comprising the edges of the elastic sidewalls 16. Referring to the enlarged section of Figure 1A, the combination of the elastic sidewalls 16 and microteeth 18 in the spaces define columns 19 of cable retaining cavities 20. Referring to the enlarged section of Figure 1B, the cable retaining cavities 20 along one side of the base 12 have corresponding retaining cavities 20 on the other side of the base 12 to form channels across the flexible cable holder 10 in which the cables 22 are placed.

One or more air gaps 24 may be within faces of the elastic sidewalls 16 to increase the elastic flexibility of the elastic sidewalls 16 and allow the elastic sidewalls 16 to expand without affecting adjacent cable retaining cavities 20. In one embodiment, the air gaps 24 have a shape that undulates around the microteeth 18 along edges of the elastic sidewalls 16. In another embodiment, the air gaps 24 may have a rectangular shape, rather than undulating shape. In one embodiment, the air gaps 24 may be spaced around .5 to 1.5 mm from the edges of the elastic sidewalls 16 and the microteeth 18.

Referring to the enlarged view shown in Figure 1A, the shape of the microteeth 18 and the shape of the air gaps 22 provide the cable retaining cavities 20 with an inner radius R1 and an outer radius R2. In one example embodiment, a diameter variance created by the inner radius R1 and an outer radius R2 may be greater than 3 or 4 mm. Other diameter variance are possible. In one embodiment, centers of the cable retaining cavities 20 may be spaced from one another by approximately 3-5 mm to provide sufficient room to hold cables of varying diameters/sizes.

Referring to Figure 1B, in one embodiment, the flexible cable holder 10 may further include one or more cross members 26 along a height of respective ones of the support walls 14 to add structural rigidity to the support walls 14. As shown, the cross members 26 may have a width less than a width of the elastic sidewalls 16 so as to not interfere with insertion and placement of cables 22 between the elastic walls 16.

In operation, one or more cables 22 lying in a direction parallel to the support walls 14 are inserted down into the columns 19 between the elastic sidewalls 16 into a respective cable retaining cavity 19. Due to the flexibility of the elastic sidewalls 16, it is not necessary to bend the flexible cable holder 12 in order to insert the cables 22. The combination of the microteeth 18 and the elastic sidewalls 16 forming the cable retaining cavities 20 provides sufficient tolerance to clamp and retain multiple cables 22 of the same or different diameters in each column 19. The microteeth 18 increase friction between the flexible cable holder 10 and installed cables 12 to provide increased retention strength.

As shown in the enlargement of Figure 1B, the flexible cable holder 10 thus comprises a spring-type structure that allows each of the cable retaining cavities 20 to adjust and tighten around a circumference of retained cables 22 independently of both i) a diameter of the cables 12 passing through adjacent cable retaining cavities 20, and ii) an expansion status of the adjacent cable retaining cavities 20. Due to the elasticity of the elastic sidewalls 16, cables 22 of different diameters can be retained in the cable retaining cavities 20. In one specific embodiment, the flexible cable holder 10 may accommodate cables 22 having a diameter of approximately 2.2 to 5.5 mm, but may be scaled to hold smaller or larger diameters.

In one embodiment, the flexible cable holder 10 may have at least six support walls 14. Since each support wall has two opposing elastic sidewalls 16, there are at least twelve elastic sidewalls 16. Each of the elastic sidewalls 16 may have at least two or more microteeth 18, forming at least cable retaining cavities 20 within the columns 19. In the example shown, the flexible cable holder 10 comprises thirteen support walls 14, twenty-six elastic sidewalls 16, and three cable retaining cavities 20 formed within twelve columns 19, to provide retain a maximum of 36 cables. In other embodiments, the design the flexible cable holder 10 can be scaled up to add taller columns and/or additional walls to clamp more cables 22.

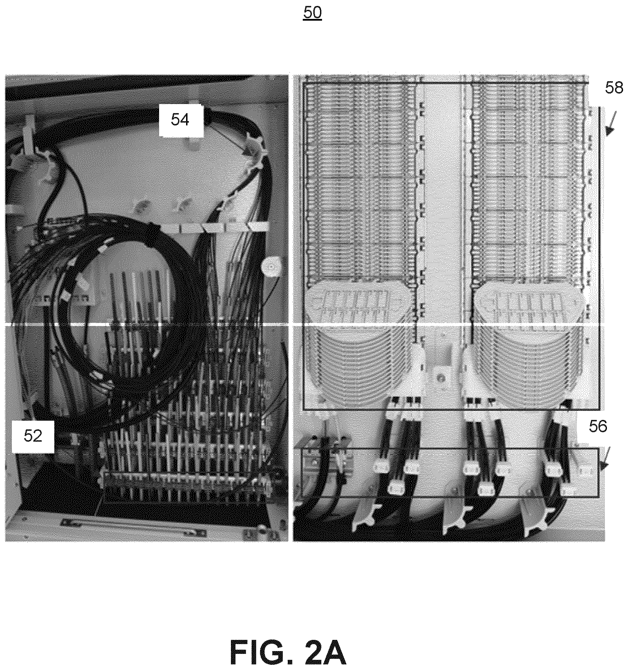

Figures 2A-2C illustrate an example of the flexible cable holder installed within a fiber-optic distribution cabinets according to one embodiment. Figure 2A illustrates components of a fiber-optic distribution cabinet 50. The fiber-optic distribution cabinet 50 (also referred to as a FTTx network node) may be installed at fiber distribution hub (FDH) to provide a connection interface between cables transferring in optical signals from a central office into the buildings.

The fiber-optic distribution cabinet 50 may include a duct holder compartment 52, routing elements 54, cable tube holders 56 and a fiber management system 58. The duct holder compartment 52 and the routing elements 54 may be located on one side of the cabinet 50 while the cable tube holders 56 and fiber management system 50 are located on another side of the cabinet 50 (e.g., on a closable door).

The duct holder compartment 52 receives and clamps feeder and drop cables. At this point, lightweight cables exit a duct and are routed to the fiber management system 58 in another part of the cabinet 50. In case of direct buried cables, the outer jacket of the cable is typically stripped, and guide-tubes in the duct holder compartment 52 are used to transfer the optical fiber cables to the fiber management system 58. The routing elements 54 are located above the duct holder compartment 52 and provide radius protection to the lightweight cables or guide-tubes running from the duct holder to the fiber management system 58. Conventional cable tube holders 56 are attached to the cabinet 50 at the base of the fiber management system 58 and are used to clamp the lightweight cables or tubes. Typically the cables or tubes exiting the conventional cable tube holders 56 are terminated, and bare fibers are stripped and routed to the fiber management system 58. The fiber management system 58 includes bare fiber routing elements that to accommodate the incoming/outgoing fiber optic cables and joints (fiber optic splice trays) and depending on the application other optical components (for example fiber optic splitters).

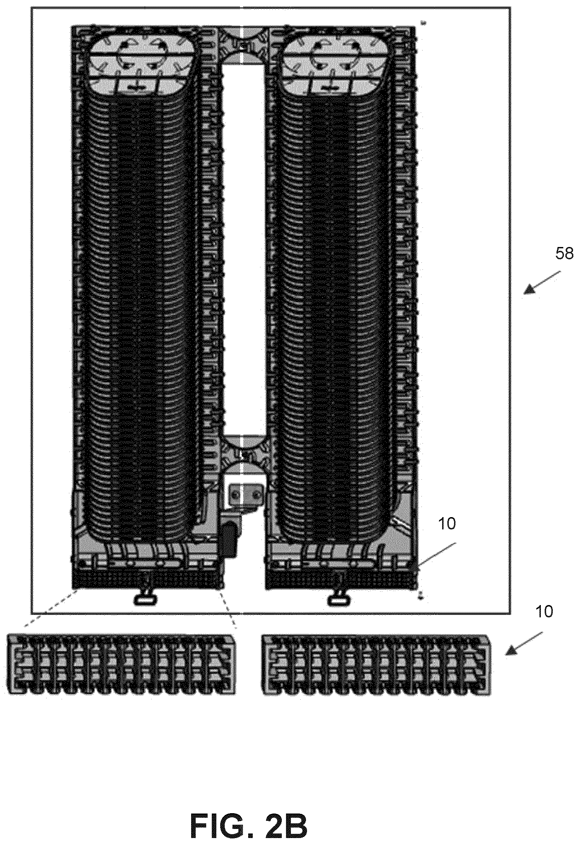

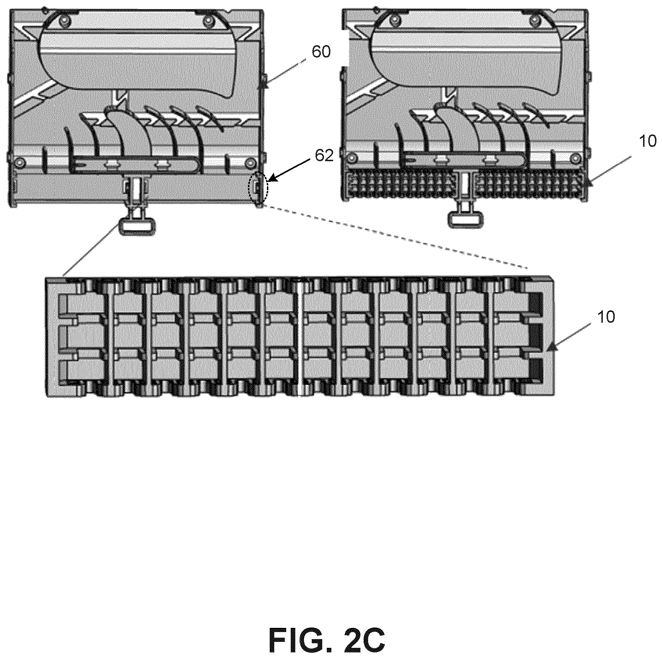

Figures 2B and 2C illustrates installation of the flexible cable tube holders 12 of the disclosed embodiments in the fiber-optic distribution cabinet 50 in place of the conventional tube holders 56. In one embodiment, the cable tube holder 12 is configured to integrate at the base of one or both sides of the fiber management system 58 as a snap-fit component.

In embodiments, the snap-fit component may include installation indentations 28 on lower sides of the base 12 of the cable tube holder 10 (Figure 1B) that snap into interlocking components 62 at the base of one or more fiber guide blocks 60 of the fiber management system 58 (Figure 2C). To install the flexible cable holder 10, a user turns the flexible cable holders 10 on its side so that the base 12 is parallel to the fiber guide blocks 60 and then pushes the installation indentations 28 and the interlocking components 62 together. No tools or fasteners are needed.

The cable tube holder of the disclosed embodiments provides several benefits as follows:
- Cables can be inserted/removed from the holder easily without the use of tools.
- The cable tube holder can accommodate different cable diameters offering flexibility to the network planning and long-term operation.
- The cable tube holder can be integrated into the fiber guide of the fiber management system, minimizing overall configuration dimensions.
- Being integrated into the fiber guide, maximum protection is provided as there is no transition between the cable holder and the fiber management system.
- The cable tube holder is a snap-in component so installation/replacement is done without the use of tools.
- The cable tube holder can be removed from the fiber guide so, even in extreme cases (for example very large tubes or radical capacity increase) it can be easily replaced in the field with another element and without affecting the fiber management system.

A flexible cable holder for integration with a Fiber Optic Management System has been disclosed. The present invention has been described in accordance with the embodiments shown, and there could be variations to the embodiments.

## Claims

1. A flexible cable holder (10), comprising:
a base (12);
support walls (14) extending vertically from the base (12);
elastic sidewalls (16) extending vertically from the base (12) and along both ends of the support walls (14), with spaces between neighboring ones of the elastic sidewalls (16); and
a plurality of microteeth (18) along edges of the elastic sidewalls (16) that are semi-circle or semi-oval in shape that define cable retaining cavities (20) within the spaces between neighboring ones of the elastic sidewalls (16) that retain respective cables.

2. The flexible cable holder of claim 1, wherein a combination of the elastic sidewalls (16) and the plurality of microteeth (18) in the spaces define columns (19) of cable retaining cavities (20).

3. The flexible cable holder of claim 2, wherein the cable retaining cavities (20) along a first side of the base (12) have corresponding retaining cavities (20) on a second side of the base (12) to form channels across the flexible cable holder (10) in which the respective cables are placed.

4. The flexible cable holder of claim 2, further comprising one or more air gaps (24) within faces of the elastic sidewalls (16) to increase elastic flexibility of the elastic sidewalls and allow the elastic sidewalls to expand without affecting adjacent ones of the cable retaining cavities (20).

5. The flexible cable holder of claim 4, wherein the one or more air gaps (24) have a shape that undulates around the microteeth (18).

6. The flexible cable holder of claim 4 or 5, wherein the shape of the microteeth (18) and the shape of the air gaps (24) provide the cable retaining cavities (20) with an inner radius and an outer radius.

7. The flexible cable holder of any of the preceding claims, further comprising one or more cross members (26) along a height of respective support walls (14) to add structural rigidity to the respective support walls (14).

8. The flexible cable holder of any of the preceding claims, wherein the flexible cable holder (10) is configured to integrate at a base of a fiber management system as a snap-fit component.

9. The flexible cable holder of any of claims 2 to 8, wherein the flexible cable holder comprises a spring-type structure that allows each of the cable retaining cavities (20) to adjust and tighten around a circumference of retained cables independently of both i) a diameter of the retained cables passing through adjacent cable retaining cavities (20), and ii) an expansion status of the adjacent cable retaining cavities (20).

10. An optical fiber cable holder system, comprising:
a flexible cable holder according to claim 1;
a first snap-fit component comprising installation indentations (28) on lower sides of the base (10); and
a fiber management system (58), comprising:
routing elements (54) to accommodate incoming and outgoing fiber optic cables; and
one or more fiber guide blocks (60) at a base of the fiber management system (58), the one or more fiber guide blocks (60) having a second snap-fit component comprising interlocking components (62), such that the flexible cable holder (10) is installed into the fiber management system (58) by pushing the installation indentations (28) and the interlocking components (62) together.

## Patentansprüche

1. Flexibler Kabelhalter (10), umfassend:
eine Basis (12);
Stützwände (14), die sich vertikal von der Basis (12) erstrecken;
elastische Seitenwände (16), die sich vertikal von der Basis (12) und entlang beider Enden der Stützwände (14) mit Zwischenräumen zwischen benachbarten der elastischen Seitenwände (16) erstrecken; und
eine Vielzahl von Mikrozähnen (18) entlang Kanten der elastischen Seitenwände (16), die halbkreis- oder halbovalförmig sind und Kabelrückhaltehohlräume (20) innerhalb der Zwischenräume zwischen benachbarten der elastischen Seitenwände (16) definieren, die jeweilige Kabel zurückhalten.

2. Flexibler Kabelhalter nach Anspruch 1, wobei eine Kombination der elastischen Seitenwände (16) und der Vielzahl von Mikrozähnen (18) in den Zwischenräumen Säulen (19) von Kabelrückhaltehohlräumen (20) definieren.

3. Flexibler Kabelhalter nach Anspruch 2, wobei die Kabelrückhaltehohlräume (20) entlang einer ersten Seite der Basis (12) entsprechende Rückhaltehohlräume (20) auf einer zweiten Seite der Basis (12) aufweisen, um Kanäle quer durch den flexiblen Kabelhalter (10) zu bilden, in denen die jeweiligen Kabel platziert werden.

4. Flexibler Kabelhalter nach Anspruch 2, der ferner einen oder mehrere Luftspalte (24) innerhalb von Flächen der elastischen Seitenwände (16) umfasst, um die elastische Flexibilität der elastischen Seitenwände zu erhöhen und den elastischen Seitenwänden zu ermöglichen, sich auszudehnen, ohne benachbarte der Kabelrückhaltehohlräume (20) zu beeinträchtigen.

5. Flexibler Kabelhalter nach Anspruch 4, wobei der eine oder die mehreren Luftspalte (24) eine Form aufweisen, die um die Mikrozähne (18) herum wellenförmig verläuft.

6. Flexibler Kabelhalter nach Anspruch 4 oder 5, wobei die Form der Mikrozähne (18) und die Form der Luftspalte (24) den Kabelrückhaltehohlräumen (20) einen inneren Radius und einen äußeren Radius bereitstellen.

7. Flexibler Kabelhalter nach einem der vorstehenden Ansprüche, der ferner ein oder mehrere Querelemente (26) entlang einer Höhe jeweiliger Stützwände (14) umfasst, um den jeweiligen Stützwänden (14) strukturelle Steifigkeit hinzuzufügen.

8. Flexibler Kabelhalter nach einem der vorstehenden Ansprüche, wobei der flexible Kabelhalter (10) konfiguriert ist, um an einer Basis eines Fasermanagementsystems als Schnappverbindungskomponente integriert zu werden.

9. Flexibler Kabelhalter nach einem der Ansprüche 2 bis 8, wobei der flexible Kabelhalter eine federartige Struktur umfasst, die es jedem der Kabelrückhaltehohlräume (20) ermöglicht, sich unabhängig von i) einem Durchmesser der zurückgehaltenen Kabel, die durch benachbarte Kabelrückhaltehohlräume (20) verlaufen, als auch von ii) einem Ausdehnungszustand der benachbarten Kabelrückhaltehohlräume (20) um einen Umfang von zurückgehaltenen Kabeln zu justieren und festzuziehen.

10. Lichtwellenleiterkabelhaltersystem, umfassend:
einen flexiblen Kabelhalter nach Anspruch 1;
eine erste Schnappverbindungskomponente, die Installationsvertiefungen (28) an Unterseiten der Basis (10) umfasst; und
ein Fasermanagementsystem (58), umfassend:
Verlegeelemente (54) zum Unterbringen eingehender und ausgehender Glasfaserkabel; und
einen oder mehrere Faserführungsblöcke (60) an einer Basis des Fasermanagementsystems (58), wobei der eine oder die mehreren Faserführungsblöcke (60) eine zweite Schnappverbindungskomponente aufweisen, die Verriegelungskomponenten (62) umfasst, sodass der flexible Kabelhalter (10) in das Fasermanagementsystem (58) installiert wird, indem die Installationsvertiefungen (28) und die Verriegelungskomponenten (62) zusammengedrückt werden.

## Revendications

1. Support de câble flexible (10), comprenant :
une base (12) ;
des parois de support (14) s'étendant verticalement depuis la base (12) ;
des parois latérales élastiques (16) s'étendant verticalement depuis la base (12) et le long des deux extrémités des parois de support (14), avec des espaces entre celles voisines des parois latérales élastiques (16) ; et
une pluralité de microdents (18) le long des bords des parois latérales élastiques (16) qui sont de forme semi-circulaire ou semi-ovale qui définissent des cavités de retenue de câble (20) à l'intérieur des espaces entre celles voisines des parois latérales élastiques (16) qui retiennent des câbles respectifs.

2. Support de câble flexible selon la revendication 1, dans lequel une combinaison des parois latérales élastiques (16) et de la pluralité de microdents (18) dans les espaces définit des colonnes (19) de cavités de retenue de câble (20).

3. Support de câble flexible selon la revendication 2, dans lequel les cavités de retenue de câble (20) le long d'un premier côté de la base (12) ont des cavités de retenue (20) correspondantes sur un second côté de la base (12) pour former des canaux à travers le support de câble flexible (10) dans lesquels les câbles respectifs sont placés.

4. Support de câble flexible selon la revendication 2, comprenant en outre un ou plusieurs espaces d'air (24) à l'intérieur des faces des parois latérales élastiques (16) pour augmenter la flexibilité élastique des parois latérales élastiques et permettre aux parois latérales élastiques de s'étendre sans affecter celles adjacentes des cavités de retenue de câble (20).

5. Support de câble flexible selon la revendication 4, dans lequel le ou les espaces d'air (24) ont une forme qui ondule autour des microdents (18).

6. Support de câble flexible selon la revendication 4 ou 5, dans lequel la forme des microdents (18) et la forme des espaces d'air (24) confèrent aux cavités de retenue de câble (20) un rayon interne et un rayon externe.

7. Support de câble flexible selon l'une quelconque des revendications précédentes, comprenant en outre une ou plusieurs traverses (26) le long d'une hauteur des parois de support (14) respectives pour ajouter une rigidité structurelle aux parois de support (14) respectives.

8. Support de câble flexible selon l'une quelconque des revendications précédentes, dans lequel le support de câble flexible (10) est conçu pour s'intégrer au niveau d'une base d'un système de gestion de fibres en tant que composant à encliquetage.

9. Support de câble flexible selon l'une quelconque des revendications 2 à 8, dans lequel le support de câble flexible comprend une structure de type ressort qui permet à chacune des cavités de retenue de câble (20) de s'ajuster et de se resserrer autour d'une circonférence de câbles retenus indépendamment à la fois i) d'un diamètre des câbles retenus passant à travers des cavités de retenue de câble (20) adjacentes, et ii) d'un état d'expansion des cavités de retenue de câble (20) adjacentes.

10. Système de support de câble à fibre optique, comprenant :
un support de câble flexible selon la revendication 1 ;
un premier composant à encliquetage comprenant des encoches d'installation (28) sur des côtés inférieurs de la base (10) ; et
un système de gestion de fibres (58), comprenant :
des éléments de routage (54) pour loger les câbles à fibre optique entrants et sortants ; et
un ou plusieurs blocs de guidage de fibres (60) au niveau d'une base du système de gestion de fibres (58), le ou les blocs de guidage de fibres (60) ayant un second composant à encliquetage comprenant des composants d'interverrouillage (62), de telle sorte que le support de câble flexible (10) est installé dans le système de gestion de fibres (58) en poussant les encoches d'installation (28) et les composants d'interverrouillage (62) ensemble.
